# EUROPÄISCHE PATENTSCHRIFT

(11) **EP 1 437 274 B1**
(45) Veröffentlichungstag und Bekanntmachung des Hinweises auf die Patenterteilung: **19.10.2005**
(21) Anmeldenummer: 03029511.7
(22) Anmeldetag: 20.12.2003
(51) Int. Cl.: B60T 7/04, B60T 17/18, B60T 13/74

(54) **Bremsvorrichtung für ein Flurförderzeug**
Braking device for an industrial truck
Dispositif de freinage pour chariot de manutention

(30) Priorität: 08.01.2003 DE 10300199
(43) Veröffentlichungstag der Anmeldung: 14.07.2004
(73) Patentinhaber: Jungheinrich Aktiengesellschaft, 22047 Hamburg (DE)
(72) Erfinder: Hüther, Sebastian, Dipl.-Ing., 22307 Hamburg (DE)
(74) Vertreter: Hauck, Graalfs, Wehnert, Döring, Siemons

(56) Entgegenhaltungen:
- EP-A- 0 436 926
- DE-A- 2 629 360
- DE-A- 10 123 730
- DE-C- 4 338 064

## Beschreibung

Die Erfindung bezieht sich auf eine Bremsvorrichtung für ein Flurförderzeug nach dem Oberbegriff des Patentanspruchs 1. Eine gattungsgemäße Bremsvorrichtung in aus den Dokument DE-26 29 360 bekannt gewerden

Ein Großteil von Flurförderzeugen wird mit einer Batterie betrieben. Es ist daher möglich, einen Bremseffekt über den generatorischen Betrieb des Elektromotors zu erhalten. Dieser ist jedoch allgemein nicht ausreichend. Es ist daher bekannt, auf der Welle des Motors eine Bremse, d.h. eine Bremsscheibe oder eine Bremstrommel anzuordnen. Es ist üblich, derartige Bremsen als Federspeicherbremsen auszubilden, bei denen mit Hilfe einer elektromagnetischen Kraft das Bremsglied mit der Bremsscheibe oder Bremstrommel außer Eingriff gehalten wird und bei Wegfall der elektrischen Aktivierung die Feder den Bremsvorgang bewerkstelligt. Es ist ferner bekannt, die Federbetätigung elektromagnetisch zu unterstützen.

Es ist ferner bekannt, alternativ oder zusätzlich ein Lastrad des Flurförderzeugs mit einer Bremse auszustatten. Die Bremse kann hydraulisch betätigt werden, wie dies allgemein für andere Fahrzeuge seit langem bekannt ist. Es ist jedoch auch denkbar, die Bremseinheit an einem Lastrad elektromagnetisch zu betätigen.

Seit einiger Zeit bestehen Bestrebungen, elektromagnetische Bremssysteme elektrisch zu betätigen. Die Verbindung zwischen einem Bremspedal und der Bremseinheit, z.B. am Lastrad, findet daher auf elektrischem Wege statt. Dem Bremspedal ist ein Potentiometer oder ein vergleichbarer elektrischer Stellungsgeber zugeordnet, der in Abhängigkeit vom Stellweg des Bremspedals ein elektrisches Bremssignal erzeugt, das auf eine Bremssteuerung gegeben wird. Die Bremssteuerung erzeugt ihrerseits ein Stellsignal für die Betätigung der Bremseinheit nach Maßgabe des Bremssignals.

Falls aus bestimmten Gründen die Funktion des Stellungsgebers versagt, kommt es bei Betätigung des Bremspedals naturgemäß nicht zu einem Bremsvorgang. Gleichwohl muss aus Sicherheitsgründen dafür gesorgt werden, dass der Fahrer das Flurförderzeug rasch zum Stehen bringt. Bei Ausfall der elektrischen Versorgung, beispielsweise durch Leitungsbruch oder dergleichen kann in Form einer Notstromversorgung dafür gesorgt werden, dass zumindest für den einzuleitenden Bremsvorgang noch ausreichende Energie zur Verfügung steht. Dadurch kann aber der Ausfall eines Stellungsgebers nicht kompensiert werden.

Der Erfindung liegt die Aufgabe zugrunde, eine Bremsvorrichtung für ein Flurförderzeug mit einer elektrischen Bremseinheit zu schaffen, bei der auch bei Ausfall des Stellungsgebers ein Bremsvorgang durchgeführt werden kann.

Diese Aufgabe wird durch die Merkmale des Patentanspruchs 1 gelöst.

Bei der Erfindung ist dem Bereich der Endstellung des Bremspedals ein mit der Bremssteuerung verbundener Signalgeber zugeordnet. Er gibt ein erstes Signal auf die Bremssteuerung, wenn das Bremspedal sich in dem Ansprechbereich des Signalgebers befindet. Die Bremssteuerung gibt daraufhin ein eine Vollbremsung verursachendes Stellsignal auf die Bremseinheit.

Der Fahrer eines Flurförderzeugs, der einen Bremsvorgang einleiten will und feststellt, dass bei Betätigung des Bremspedals keine entsprechende Reaktion der Bremse stattfindet, wird instinktiv das Bremspedal voll durchtreten in der Hoffnung, noch einen Bremseffekt zu bewirken. Dies um so mehr, wenn die Umstände eine sofortige Bremsung des Fahrzeugs verlangen. Bei der Erfindung wird der dem Bremspedal zugeordnete Signalgeber aktiviert. Er erzeugt ein entsprechendes Signal für die Bremssteuerung, die daraufhin eine Vollbremsung in Gang setzt. Mit der erfindungsgemäßen Vorrichtung ist es daher möglich, auch bei vollständigem Ausfall des Stellungsgebers, mit dem die Abbremsung mehr oder weniger feinfühlig gesteuert werden kann, eine wirksame Abbremsung des Fahrzeugs zu gewährleisten.

Für die Sicherheit des Fahrzeugs ist es ferner von Vorteil, wenn nach einer weiteren Ausgestaltung der Erfindung ein zweiter Signalgeber dem Bremspedal so zugeordnet ist, dass ein zweites Signal auf die Bremssteuerung gegeben wird, wenn das Bremspedal aus seiner Ruhestellung heraus einen ersten kurzen Betätigungsweg zurückgelegt hat und die Bremssteuerung ein Freigabesignal erzeugt für die Erzeugung des Stellsignals nach Maßgabe des Bremssignals. Hierbei wird die Bremsvorrichtung sozusagen getestet. Wenn der Fahrer das Bremspedal antippt, kann die Bremssteuerung feststellen, ob der Stellungsgeber bestimmungsgemäß ein Bremssignal erzeugt. Falls dies nicht der Fall ist, liegt eine Fehlfunktion der Bremsvorrichtung vor, der Fahrer kann nach der Erfindung aber eine Vollbremsung durchführten. Er wird sich daher vor Beginn des Fahrbetriebes von der Funktionsfähigkeit der Bremsvorrichtung auf die beschriebene Weise überzeugen. Es ist auch möglich, ein Warnsignal zu erzeugen, wenn bei Ansprache des zweiten Signalgebers das Bremssignal keine vorgegebene Größe aufweist.

Als Signalgeber kommen unterschiedliche Bauelemente in Betracht. So können z.B. Mikroschalter vorgesehen werden, die dem Bremspedal zugeordnet sind. Alternativ können bekannte Näherungsschalter verwendet werden, insbesondere Hall-Sensoren, die dem rauen Betrieb bei Flurförderzeugen gewachsen sind. Vorzugsweise erzeugen derartige Signalgeber ein digitales Signal, das dann unmittelbar in die Bremssteuerung gegeben und dort verarbeitet werden kann.

Die Erfindung wird nachfolgend anhand von Zeichnungen näher erläutert.
- Fig. 1: zeigt ein Schaltbild für eine Bremsvorrichtung nach der Erfindung.
- Fig. 2: zeigt ein Diagramm für die einzelnen Signale, die in der Bremsvorrichtung nach der Erfindung erzeugt werden.

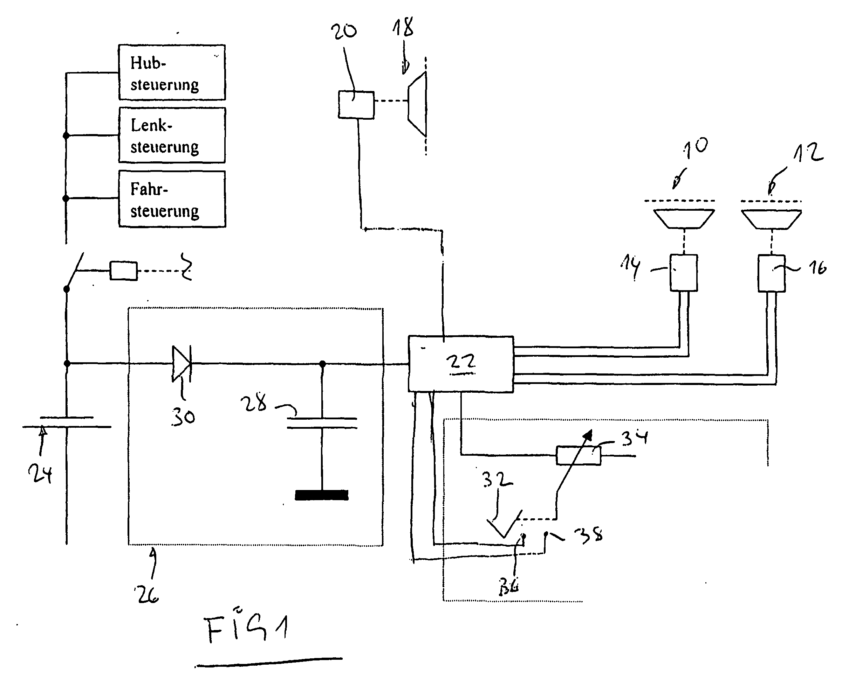

In Fig. 1 sind zwei Lastradbremsen 10, 12 eines nicht gezeigten Flurförderzeugs angedeutet. Sie werden elektromagnetisch betätigt oder gesteuert durch die Elektromagneten 14 bzw. 16. Ferner ist eine so genannte Antriebsbremse 18 dargestellt, die z.B. dem Antriebsmotor zugeordnet ist. Sie ist ebenfalls mit Hilfe eines Elektromagneten 20 betätigt. Die Ansteuerung der Bremsen erfolgt über eine Bremssteuerung 22, welche die Zufuhr von elektrischer Energie aus einer Fahrzeugbatterie 24 zu den Bremsen 10, 12 und 18 steuert. Das nicht gezeigte Flurförderzeug weist außerdem Steuerkomponenten für die Hubsteuerung, die Lenksteuerung und die Fahrsteuerung auf. Hierauf soll nicht weiter eingegangen werden. Jedoch kann die Antriebsbremse 18 über die Lenk- und Fahrsteuerung betätigt werden bzw. eine Bremsbetätigung in Abhängigkeit von Parametern aus diesen Steuerkomponenten erfolgen. Eine Verbindung zwischen der Lenk- und Fahrsteuerung und der Bremssteuerung 22 ist in Fig. 1 nicht dargestellt.

Zwischen der Batterie 24 und der Bremssteuerung ist eine Notstromversorgung 26 geschaltet, die einen Kondensator 28 und eine Diode 30 enthält. Über die Notstromversorgung 26 kann die Bremssteuerung über eine vorgegebene Zeit noch mit Energie versorgt werden, um einen Bremsvorgang auszuführen.

Zur Betätigung der oben angegebenen Bremsen ist ein Bremspedal 32 vorgesehen, das mit einem Potentiometer 34 als Stellungsgeber zusammenwirkt. Auf diese Weise wird für die Bremssteuerung ein analoges Signal in Form einer Analogspannung erzeugt, nach deren Maßgabe die Bremsen 10, 12 und 18 betätigt werden. Dem Bremspedal 32 sind zwei Signalgeber 36, 38 zugeordnet. Der Signalgeber 36 befindet sich in einer Position, dass er bei einer Betätigung des Bremspedals 32 aus der Ruhestellung heraus um einen kleinen Weg anspricht. Sein Signal wird auf die Bremssteuerung 22 übertragen. Der weitere Signalgeber 38 ist so angeordnet, dass er ein Signal erzeugt, wenn das Bremspedal mehr oder weniger bis zum Ende durchgetreten ist. Auch dieses Signal wird auf die Bremssteuerung 22 übertragen.

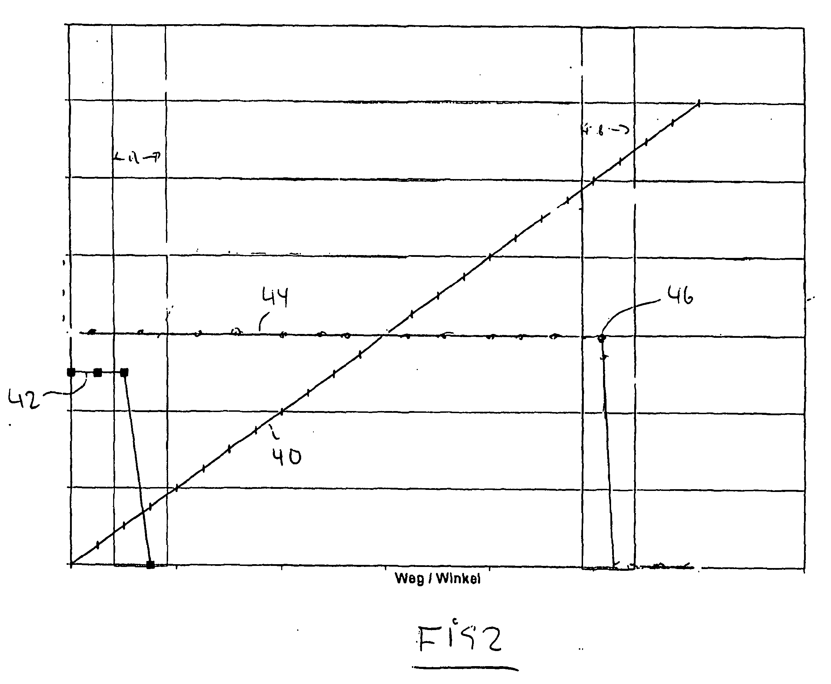

In Fig. 2 ist durch die Gerade 40 das Bremssignal dargestellt, das vom Potentiometer 34 auf die Bremssteuerung 22 gegeben wird. Das Bremssignal 40 steigt in Abhängigkeit vom Weg bzw. Winkel des Bremspedals 32 linear an. Die Signalgeber 36, 38 können als Schalter bzw. Ruhekontakte ausgebildet sein. Das bedeutet, dass im geschlossenen Zustand ein Strom über die Kontakte fließt. In Fig. 2 ist bei 42 der Ruhestrom für den Signalgeber 36 eingezeichnet. Wird durch Pedalbetätigung der Kontakt geöffnet, fällt der Strom auf Null. Dieses digitale Signal wird auf die Bremssteuerung 22 übertragen und dieses stellt fest, ob zu diesem Zeitpunkt das Bremssignal 40 vorhanden ist bzw. eine vorgegebene Größe hat. Ist dies der Fall, kann davon ausgegangen werden, dass die Signalerzeugung über das Bremspedal 34 ordnungsgemäß funktioniert.

Bei 44 wird der Ruhestrom angedeutet, der über den zweiten Ruhestromkontakt 38 fließt. Der Kontakt 38 wird geöffnet, wenn das Bremspedal 32 seine Endposition erreicht hat oder nahe dieser ist. Die Endposition wird durch den Punkt 46 angedeutet. Der Strom fällt auf Null, und das digitale Signal wird in der Bremssteuerung 22 entsprechend verarbeitet, indem nunmehr auf die Bremsen 10, 12 und ggf. 18 ein Stellsignal gegeben wird, das einer Vollbremsung verursacht. Dieses Signal wird auch dann erzeugt, wenn aus welchen Gründen immer das Potentiometer 34 versagt und ein Bremssignal 40 nicht zustande kommt.

Der durch a bzw. b in Fig. 2 gekennzeichnete Bereich stellt den Toleranzbereich für das erste und zweite Signal dar. Es versteht sich, dass bei Verwendung von Schaltern oder auch von Näherungssensoren oder dergleichen das Ausgangssignal nicht exakt bei derselben Wegstrecke des Bremspedals erzeugt wird.

## Patentansprüche

1. Bremsvorrichtung für ein Flurförderzeug, mit einer elektromagnetischen Bremseinheit an einem Lastrad und/oder einem Antriebsmotor, einem Bremspedal (32), dessen Stellung von einem elektrischen Stellungsgeber (34) erfasst wird, der ein analoges elektrisches Bremssignal erzeugt, einer Bremssteuerung (22), in die das analoge Bremssignal gegeben wird und die ein Stellsignal für die elektromagnetische Betätigung der Bremseinheit nach Maßgabe des analogen Bremssignals erzeugt, **dadurch gekennzeichnet, dass** dem Bereich der Endstellung des Bremspedals (32) ein mit der Bremssteuerung (22) verbundener Signalgeber (38) zugeordnet ist, der ein erstes Signal auf die Bremssteuerung (22) gibt, wenn das Bremspedal (32) in dem Ansprechbereich des Signalgebers (38) ist und die Bremssteuerung (22) ein die Vollbremsung verursachendes Stellsignal für die Bremseinheit (10, 12, 18) erzeugt.

2. Vorrichtung nach Anspruch 1, **dadurch gekennzeichnet, dass** dem Bremspedal (32) ein zweiter Signalgeber (36) so zugeordnet ist, der ein zweites Signal auf die Bremssteuerung (22) gibt wird, wenn das Bremspedal (32) aus seiner Ruhestellung heraus einen ersten kurzen Betätigungsweg zurückgelegt hat und die Bremssteuerung (22) ein Freigabesignal erzeugt, wenn zu gleicher Zeit vom Stellungsgeber (34) ein Bremssignal erzeugt worden ist.

3. Vorrichtung nach Anspruch 2, **dadurch gekennzeichnet, dass** die Bremssteuerung (22) ein Warnsignal erzeugt, wenn bei Erzeugung des zweiten Signals das Bremssignal (40) nicht eine vorgegebene Größe hat.

4. Vorrichtung nach einem der Ansprüche 1 bis 3, **dadurch gekennzeichnet, dass** erster und/oder zweiter Signalgeber (38, 36) ein digitales Signal erzeugt.

5. Vorrichtung nach einem der Ansprüche 1 bis 4, **dadurch gekennzeichnet, dass** mindestens ein Signalgeber (36, 38) ein mechanischer Schalter ist.

6. Vorrichtung nach einem der Ansprüche 1 bis 5, **dadurch gekennzeichnet, dass** mindestens ein Signalgeber (36, 38) ein Näherungssensor ist.

7. Vorrichtung nach Anspruch 6, **dadurch gekennzeichnet, dass** der Näherungssensor von einem Hall-Sensor gebildet ist.

## Claims

1. A braking device for an industrial truck, comprising an electromagnetic brake unit on a load-bearing wheel and/or driving motor, a brake pedal (32) the position of which is detected by an electric position detector (34) which generates an analog electric braking signal, and a brake control (22) into which the analog braking signal in input and which generates a control signal to actuate the brake unit electromagnetically in response to the analog braking signal, **characterized in that** the area of the end position of the brake pedal (32) has associated therewith a signal transmitter (38) connected to the brake control (22) which provides a first signal to the brake control (22) when the brake pedal (32) is within the range of response of the signal transmitter (38) and the brake control (22) generates a control signal for the brake unit (10, 12, 18) that causes a hard stop.

2. The device as claimed in claim 1, **characterized in that** the brake pedal (32) has associated therewith a second signal transmitter (36) in a way that it provides a second signal to the brake control (22) when the brake pedal (32) has traveled through a first short actuation path from its rest position and the brake control (22) generates a release signal when the position detector (34) has generated a braking signal at the same time.

3. The device as claimed in claim 2, **characterized in that** the brake control (22) generates an alarm signal when the braking signal (40) does not have a predetermined magnitude upon generation of the second signal.

4. The device as claimed in any one of claims 1 to 3, **characterized in that** the first and/or second signal transmitter(s) (38, 36) produce a digital signal.

5. The device as claimed in any one of claims 1 to 4, **characterized in that** at least one signal transmitter (36, 38) is a mechanical switch.

6. The device as claimed in any one of claims 1 to 5, **characterized in that** at least one signal transmitter (36, 38) is a proximity sensor.

7. The device as claimed in claim 6, **characterized in that** the proximity sensor is constituted by a Hall sensor.

## Revendications

1. Dispositif de freinage pour un chariot de manutention au sol, comportant une unité de freinage électromagnétique sur une roue de charge et/ou sur un moteur d'entraînement, une pédale de frein (32) dont la position est relevée par un détecteur électrique de position (34), qui émet un signal électrique analogique de freinage, une commande de frein (22), dans laquelle est envoyé le signal de freinage analogique et qui émet un signal de commande pour actionner de manière électromagnétique l'unité de freinage en fonction du signal analogique de freinage reçu, **caractérisé en ce qu'**à la zone de position extrême de la pédale de frein (32), est associé un émetteur de signal (38), qui est relié à la commande de frein (22) et qui envoie un premier signal à la commande de frein (22) quand la pédale de frein (32) est dans la zone de réaction de l'émetteur de signal (38) et quand la commande de frein (22) émet un signal de commande provoquant le freinage complet pour l'unité de freinage (10, 12, 18).

2. Dispositif suivant la revendication 1, **caractérisé en ce qu'**à la pédale de frein (32) est associé un deuxième émetteur de signal (36) qui envoie un deuxième signal à la commande de frein (22) quand la pédale de frein (32) a effectué depuis sa position de repos, une première course d'actionnement courte et quand la commande de frein (22) produit un signal de libération si, au même instant, un signal de freinage a été produit par le détecteur de position (34).

3. Dispositif suivant la revendication 2, **caractérisé en ce que** la commande de frein (22) produit un signal d'avertissement si, en cas d'émission du deuxième signal, le signal de freinage (40) n'a pas une grandeur prédéfinie.

4. Dispositif suivant l'une des revendications 1 à 3, **caractérisé en ce que** le premier et/ou le deuxième émetteur de signal (38, 36) produisent un signal numérique.

5. Dispositif suivant l'une des revendications 1 à 4, **caractérisé en ce qu'**au moins un émetteur de signal (36, 38) est un commutateur mécanique.

6. Dispositif suivant l'une des revendications 1 à 5, **caractérisé en ce qu'**au moins un émetteur de signal (36, 38) est un détecteur de proximité.

7. Dispositif suivant la revendication 6, **caractérisé en ce que** le détecteur de proximité est un détecteur de Hall.
